# EUROPÄISCHE PATENTSCHRIFT

(11) **EP 0 531 568 B1**
(45) Veröffentlichungstag und Bekanntmachung des Hinweises auf die Patenterteilung: **12.03.1997**
(21) Anmeldenummer: 91115428.4
(22) Anmeldetag: 12.09.1991
(51) Int. Cl.: C08J 5/18, C08J 7/04, G02B 5/30, C08L 29/04

(54) **Verfahren zur Herstellung lichtpolarisierender Giessfolien**
Process for preparing light polarising casting films
Procédé pour préparer des films polarisant la lumière par coulage

(43) Veröffentlichungstag der Anmeldung: 17.03.1993
(73) Patentinhaber: BAYER AG, 51368 Leverkusen (DE)
(72) Erfinder: Claussen, Uwe, Dr., W-5090 Leverkusen 3 (DE); Kröck, Friedrich Wilhelm, Dr., W-5068 Odenthal (DE); Roche, Edouard, Dr., W-5204 Lohmar 1 (DE)

(56) Entgegenhaltungen:
- DE-A- 3 026 614
- GB-A- 2 144 760

## Beschreibung

Die vorliegende Erfindung betrifft ein Verfahren zur Herstellung lichtpolarisierender Gießfolien, enthaltend Polyvinylalkohol und dichroitische farbgebende Komponenten, gegebenenfalls andere farbgebende Komponenten, gegebenenfalls Additive und gegebenenfalls oberflächenaktive Verbindungen, dadurch gekennnzeichnet, daß sie in zwei oder mehreren Schichten aufgebaut sind, wobei sich mindestens zwei Schichten in ihrer Zusammensetzung unterscheiden.

Filme auf der Basis von Polyvinylalkohol (PVAL), die Iod oder dichroitische Farbstoffe als polarisierende Agentien enthalten, sind bekannt.

GB-A 2.144.760 beschreibt lichtpolarisierende mehrschichtige Folien, die Polyvinylalkohol und dichroitische lichtabsorbierende Materialien enthalten, bei denen der mehrschichtige Folienverbund jedoch durch einfaches Übereinanderlegen verschiedener individuell hergestellter Monoschichten erhalten wird.

Technische Verwendung haben bislang allein die Iod-haltigen Polarisatoren gefunden, die beispielsweise in den passiven Flüssigkristall-Displays zur Sichtbarmachung der Information eingesetzt werden. Bei Anwesenheit von Feuchtigkeit kennzeichnen diese Filme eine ausgezeichnete Lichtechtheit und hervorragende dichroitische Eigenschaften im langwelligen Bereich des sichtbaren Spektrums. Das wirksame Agens dieser Filme ist der Iod-PVAL-Komplex [M.M. Zwick, J. Appl. Polym. Sci.; 9 2393-2424 (1965)], der das Tageslicht zwar breitbandig, aber nicht vollständig absorbiert. Im kurzwelligen (orange-gelben) Bereich des Spektrums liegt ein Bereich verminderter Extinktion, weswegen die Folien eine blaue Eigenfarbe zeigen.

Dies hat nachteilige Folgen, wenn man z.B. nach dem Durchgang durch die Folie weißes Licht erhalten will. Das unpolarisiert durchgelassene Licht vermindert den Dichroismus und damit die Polarisationsleistung in diesem Bereich. Zur Steigerung des Dichroismus ist man gezwungen, die Konzentration an Jod-Komplex zu erhöhen. Diese Korrektur im kurzwelligen Bereich zieht aber eine übermäßige Extinktion im langwelligen Bereich nach sich. Die Folge ist eine deutliche Schwächung des durchgelassenen Lichts in der Durchgangsstellung. Eine optische Anzeige, die mit dieser Folie bestückt wird, ist in ihrer Helligkeit vermindert. Um zu vertretbaren Helligkeiten zu gelangen, muß man Kompromisse schließen.

Eine wichtige kritische Meßgröße einer universal verwendbaren optischen Anzeige ist die Ablesbarkeit bei verschiedenen Beleuchtungsverhältnissen, sie wird üblicherweise als "Perceived contrast ratio" (PCR) angegeben. Aus diesem folgt, daß die Transmission einerseits in der Sperrstellung so klein wie möglich (Ablesbarkeit bei Dunkelheit), andererseits in der Durchgangsstellung so groß wie möglich (Ablesbarkeit bei Helligkeit) gemacht werden muß. Dies erfordert eine ganz gleichmäßige, möglichst hohe Polarisationsleistung des Filters über den gesamten Bereich des sichtbaren Spektrums, welche mit der Jodfolie prinzipiell nicht erreicht werden kann.

Es hat nicht an Versuchen gefehlt, Jod durch Mischungen anderer dichroitischer Chromophore zu ersetzen, um ein Neutralgrau mit gleichmäßigen Dichroismus zu erzeugen. Allerdings bedarf es hierzu beispielsweise einer Gamme sehr leistungsfähiger Farbstoffe. Sie müssen neben guten Licht- und Wetterechtheiten eine hohe Extinktion und einen hohen Dichroismus in der Matrix aufweisen.

So sind vorzugsweise Polyazofarbstoffe vorgeschlagen worden (Nippon Kayaku JA 59-145 255, 60-156 759, 60-168 743). Obgleich aber der Dichroismus bei den Farbstoffen eine verbreitete Eigenschaft ist, (vgl. W. Hanle, H. Scherer, Zeitschr. Naturforsch. 6a 437-439 (1951)) gelang es bisher nicht, die spektralen Eigenschaften der Jodfolie zu erreichen oder zu übertreffen. Dies ist dem Fehlen guter Blaunuancen, der Forderung nach dem hohen Dichroismus des Systems Farbstoff/Matrix und der verlangten extremen Farbdichte im absorbierenden Zustand zuzuschreiben. Im Vergleich zu den Farbstoffen hat nämlich das im Komplex gebundene Iod-Molekül eine hohe molare Extinktion, sie beträgt etwa 43 000 (R.R. Baldwin, R.S. Baer, R.E. Rundle, J.Am. Chem.Soc., 66 111 (1944)). Da das Chromophor zweiatomig ist, erreicht man sehr hohe molare Konzentrationen und damit extreme Extinktionen. Farbstoffe, die eine vergleichbare molare Absorption haben, weisen in der Regel deutlich höhere - meist 4-8 fach höhere - Molgewichte auf, weswegen es schwer fällt, mit einem Farbstoff die verlangten Extinktionen zu erhalten. Man ist nämlich gezwungen, sehr hohe Konzentrationen an Farbstoffen einzusetzen, wobei man schnell die Grenze der Löslichkeit im Trägermaterial erreicht und Übersättigungseffekte erhält. Diese können sich beispielsweise in unerwünschten Streuungen des Lichts äußern.

Hinzu kommt, daß zur Erzeugung eines einheitlichen Grautons mindestens ein Farbtripel notwendig ist. Natürlich kann man in solche Tripel prinzipiell nur miteinander verträgliche Chromophore einsetzen, was angesichts der Vielzahl zu leistender Eigenschaften eine weitere erhebliche Einschränkung der Möglichkeiten bedeutet, wenn es nicht gelingt, die Wechselwirkungen zu harmonisieren. Da dies selten vollkommen gelingt, hat man immer das Problem einer Überlastung der Matrix mit Farbstoffen, was den Aufbau der Folie stört und zu Ausfällungen, Instabilitäten und Senkung des Dichroismus führt.

Eine weitere Schwierigkeit besteht in der Energieübertragung, wie sie bei Farbstoffmischungen, insbesondere bei Anthrachinon- und Azofarbstoff-Mischungen, häufiger beobachtet wird (Claussen, Brockes, Kops, Kröck, Neeff, Proc. SID, 26, 17-22 (1985). Deswegen ist die Beständigkeit gegen Licht eine generelle Schwierigkeit dichroitischer Chromophore. Man ist in der Regel gezwungen, sie durch Verwendung von Lichtschutzmitteln zu verbessern. Diese Additive müssen mit der Matrix verträglich sein, was ein weiteres Problem der Optimierung aufwirft.

Die Vielfalt der Stoffe und Eigenschaften hat es bisher verhindert, eine Polarisationsfolie bereitstellen zu können, deren farbgebende Komponente nicht Iod oder ein Iod-Komplex ist, obgleich diese deutliche Vorteile in der breitbandigen Polarisationsleistung sowie der Beständigkeit gegen Feuchtigkeit und Wärme hätte.

Wir haben gefunden, daß man polarisierende Filme mit extrem hohen Extinktionen und störungsfreiem Aufbau dadurch erzeugen kann, daß man die Filme in zwei oder mehreren Schichten getrennt aufbaut.

Gegenstand der vorliegenden Erfindung ist ein Verfahren zur Herstellung lichtpolarisierender Gießfolien, die in zwei oder mehreren Schichten aufgebaut sind, wobei sich mindestens zwei Schichten in ihrer Zusammensetzung unterscheiden, das dadurch gekennzeichnet ist, daß man wäßrige Lösungen von Polyvinylalkohol (PVAL) und dichroitischen farbgebenden Komponenten zwei oder mehrmals auf einer Unterlage mittels eines Mehrfachgießers anträgt und trocknet, den getrockneten Film von der Unterlage löst und anschließend monoaxial verstreckt.

Vorzugsweise unterscheiden sich die mindestens zwei Schichten in der Art und/oder der Konzentration ihrer farbgebenden Komponenten.

An der Phasengrenze der mindestens zwei sich unterscheidenden Schichten tritt vorzugsweise eine sprunghafte Änderung der Zusammensetzung auf.

Als Gießlösungen zur Herstellung der erfindungsgemäßen Folien kommen wäßrige Lösungen von Polyvinylalkohol und farbgebenden Komponenten (im folgenden Farbstoffe genannt) in Frage, die noch Additive enthalten können. Besonders bevorzugt sind Lösungen mit einem Feststoffgehalt von 4 bis 12 Gew.-% und einem darauf bezogenen Farbstoffgehalt von 0,1 bis 7 Gew.-%, wobei bei fluoreszenzfähigen Farbstoffen ein Gehalt von 0,1 und 2 Gew.-%, bei anderen bunten Farbstoffen einer von 4-7 Gew.-% bezogen auf 100 Gew.-% Feststoffgehalt bevorzugt ist.

Gegebenenfalls können die Gießlösungen noch oberflächenaktive Verbindungen, besonders anionische oder amphotere Tenside enthalten, die allein oder in Mischungen eingesetzt werden können um die Benetzungseigenschaften der Lösungen zu gewährleisten. Der Anteil der oberflächenaktiven Verbindungen beträgt von 0,001 bis 1 Gew.-%, vorzugsweise von 0,005 bis 0,1 Gew.-%, bezogen auf 100 Gew.-% Gießlösung.

Geeignete oberflächenaktive Verbindungen sind beispielsweise Sulfonsäuren, wie Alkansulfonsäuren, insbesondere Sulfobernsteinsäure-octylester. Perfluoralkansulfonsäuren, insbesondere Perfluoroctansulfonsäure, und ihre Tetraalkylammoniumsalze, beispielsweise das Tetraethylammoniumsalz, Sulfate, insbesondere sulfatierte phenolpolyglykolether oder Alkylsulfonate, amphotere Tenside, insbesondere Alkanamidopropylbetaine, beispielsweise Lauramidopropylbetain oder die in den "Chemical Abstracts" mit den folgenden REG-Nrn. aufgeführten Verbindungen:
73772-45-9, 96565-37-6, 4292-10-8, 59272-84-3, 25729-05-9, 6179-44-8, 21244-99-5, 58793-79-6, 32954-43-1, 92836-76-5 oder nichtionische Tenside wie 4-Octylphenolpolyglykolether.

Gegebenenfalls können den Gießlösungen noch Additive zugesetzt werden, die eine konzentrationsproportionale Wirkung auf den Dichroismus haben und somit den Dichroismus der Farbstoffe in der Matrix verstärken. Geeignete Additive im Sinne der Erfindung sind z.B. niedere einoder mehrwertige Alkohole wie Methanol, Ethanol oder Glykol, Glyzerin, Trimethylolethan, Trimethylolpropan, Pentaerythrit, Sorbit, deren Ether wie Glykolmonomethylether, Glykolmonomethylether, Glykoldimethylether, glykoldimethylether, niedere Hydroxyamine wie Propanolamin oder Amide wie DMF, N-Methylpyrrolidon, Pyrrolidon oder ε-Caprolactam. Die Additive können allein oder vorteilhafter in Mischungen eingesetzt werden, wobei als Mischungsbestandteile auch niedrige einwertige Alkohole, z.B. Methanol, Ethanol, i-Propanol auftreten können.

Die Konzentration des Dichroismus-verstärkenden Additivs ist von der individuellen Eigenschaften der eingesetzten dichroitischen Farbstoffe abhängig. Ihre Höhe ist durch die technischen Eigenschaften der Gießlösung und der Folie beschränkt.

Die Additive werden der Gießlösung vorzugsweise in Mengen zugesetzt, die 5-50 Gew.-%, bezogen auf die Gießlösung ausmachen.

Bevorzugte erfindungsgemäße Polyvinylalkohole sind Polyvinylalkohole, die durch vollständige oder teilweise Verseifung von Polyvinylacetat hergestellt worden sind, insbesondere Typen, die in 4 %iger wäßriger Lösung eine Viskosität > 4 mPasec, vorzugsweise 35-70 mPasec, bei 20°C und einen Verseifungsgrad > 80 Mol-%, vorzugsweise 85-100 Mol-% aufweisen.

Als Farbstoffe kommen alle in der Gießlösung löslichen organischen Farbstoffe in Frage. Ein Vorteil des Verfahrens ist es, die Lösungen der Bestandteile einzeln optimieren zu können. Man kann sogar in einer Mischung unverträgliche Farbstoffe in der Folie kombinieren, indem man beispielsweise eine Trennschicht aus ungefärbtem Material zwischen die Schichten zwischengießt, um eine eventuelle Diffusion in die jeweils anders gefärbte Schicht zu verhindern.

Der Naßauftrag der Schichten ist zwischen 10 und 500 µm frei einstellbar und kann zur Nuancierung des Aufbaus der Folie verändert werden. Bei Einsatz eines Kaskadengießers zur Herstellung der Schichten ist ein Naßauftrag von 20 - 250µm, bei Verwendung eines Vorhanggießers von 25 - 600 µm bevorzugt.

Bevorzugte Farbstoffe sind solche, wie sie in DE-A 39 21 669, DE-A 3 843 414, DE-A 3 615 765 jeweils in Anspruch 1 beschrieben sind.

Die Anzahl der Schichten ist größer oder gleich zwei, bevorzugt sind 2 bis 9 Schichten. Zur Erhöhung der Farbdichte kann der gleiche Farbstoff gegebenenfalls in mehreren Schichten hintereinander aufgezogen werden.

Die Schichtenfolge in den erfindungsgemäßen Folien oder Filmen kann zeitlich nacheinander oder gleichzeitig unter Verwendung eines Kaskadengießers oder eines Vorhanggießers aufgebaut werden.

Die lichtpolarisierenden Filme oder Folien können in an sich bekannter Weise mit anderen doppelbrechungsfreien Materialien compoundiert oder laminiert werden. Als Schutzüberzug eignen sich z.B. Folien aus einem Tetrafluorethylen-hexafluorethylen-Copolymer oder einem anderen Fluorkohlenwasserstoff-Harz, einem Polyester-, Polyolefin- oder Polyamid-Harz, einem Polycarbonat oder Celluloseester, vorzugsweise -(tri)acetat, -propionat oder -butylrat.

Bevorzugt ist ein Schichtaufbau, bei dem die Lichtstabilisatoren in der äußeren Schutzschicht liegen.

Die Schichten lassen sich nach dem Trocknen leicht von der Unterlage lösen und recken. Das Verstrecken erfolgt bei Temperaturen von 60 bis 180°C vorzugsweise von 100 bis 150°C um einen Betrag von 300 bis 1000 %. Nach Verkleben mit einer optisch isotropen und im sichtbaren Spektralgebiet leeren Folie erhält man Polarisationsfolien mit einem sehr guten dichroitischen Verhältnis und einer frei wählbaren Nuance.

Gewünschtenfalls können die farbstoffhaltigen Filme auch einer Nachbehandlung, z.B. mit wäßriger Borsäurelösung, zwecks Verbesserung der Feuchtebeständigkeit oder der Lichtdurchlässigkeit unterworfen werden. Die Bedingungen, unter denen diese Nachbehandlung durchgeführt wird, können unabhängig vom Filmmaterial und Farbstoff schwanken. Vorzugsweise arbeitet man mit einer 1-15 gew.-%igen, besonders bevorzugt 5-10 gew.-%igen Borsäurelösung von 30-80°C, besonders bevorzugt bei 50-80°C. Vorzugsweise setzt man der Borsäurelösung Tenside und gegebenenfalls anorganische Salze zu. Die Tenside können nicht-ionisch, kationisch oder anionisch sein, bevorzugt sind sie nicht-ionisch.

Beispiele für nicht-ionische Tenside sind: Additionsprodukte von Ethylenoxid an höhere Alkohole oder Phenole, beispielsweise Nonylphenol. Vorzugsweise verwendet man, bezogen auf Wasser, 0,005-0,5 Gew.-%, besonders bevorzugt 0,02-0,2 Gew`-% Tensid. Als anorganische Salze kommen vorzugsweise Na-sulfat, und weiterhin K-sulfat, Na-chlorid, KCl, Na-nitrat, K-nitrat in Betracht. Bezogen auf Wasser werden vorzugsweise 0,1-5 Gew.-%, besonders bevorzugt 0,3-3 Gew.-% anorganische Salze eingesetzt. gesetzt. Gewünschtenfalls kann noch eine Fixierungsbehandlung mit einer wäßrigen Lösung einer hochmolekularen kationischen Verbindung vorgenommen werden.

Die aus den erfindungsgemäßen Filmen herstellbaren Polarisationsfolien finden als Polarisationsfilter und optische Anzeigen Verwendung.

### Versuchsbeispiele:

### Beispiel 1 (zum Vergleich)

Einer Mischung aus 224 g Polyvinylalkohol (Mowiol 28-99 Viskosität nach DIN 53 015:28 ± 2 mPas, Hydrolysegrad 99,4 ± 0,4 Mol-%, Esterzahl 8 ± 5 mg KOH/g, Hersteller Hoechst AG), 4552 g Wasser, 45 g Glycerin und 372 g Methanol werden 7 g 4,4'-Azo-[3-(2-sulfo-4-hydroxi-6-N-benzoylamino-)naphthalin]-stilben-2-sulfonsäure hinzugefügt und unter Rühren gelöst (Lösung A). Nach 12 h Rührzeit bei einer Temperatur von 90°C wird über ein Seitz-Filter geklärt und 50 g einer 4 gew.-Xigen wäßrigen Lösung eines anionischen Tensids hinzugegeben. Die Viskosität der Gießlösung beträgt jetzt 27,3 mPas bei 40°C.

Diese Lösung wird in 130 µm Dicke naß auf ein mit 75 m/min bewegtes Kunststoffband gegossen, über das Warmluft im Gegenstrom geführt wird. Man erhält einen glatten 11 µ dicken Film.

Anschließend übergießt man den Film mit 150 µm Schichtdicke einer Lösung aus 196 g Polyvinylalkohol (Mowiol 28-99), 40 g Glycerin, 3969 g Wasser und 6 g 4,4'Azo(4-sulfo-azobenzol)flavonsäure (Lösung B). Man erhält einen in der Durchsicht tief rubinfarbenen Film der Dicke 14 µm, der nach dem Recken 1:6 ein Kontrastverhältnis CR im Bereich von 400 bis 600 nm von >20 zeigt.

Das Kontrastverhältnis CR ist entsprechend A. Bloom, E.B. Priestley, IEEE, ED 24, Seite 1823 (1977) definiert.

### Beispiel 2

Zur Herstellung der Lösungen verfährt man wie in Beispiel 1 und erhöht den Gehalt des PVAL in Lösung A auf 10 Gew.-%. Man trägt 200 µm dieser Lösung zwischen zwei 30 µm dicken Schichten der in Beispiel 1 in Lösung B gegebenen Zusammensetzung auf einem Vorhanggießer naß an und erhält nach dem Trocknen einen 25 µm dicken Film, der nach dem Recken zwischen 400 und 600 nm eine Farbdichte von 3 und ein Kontrastverhältnis CR von 20 bis 50 hat.

### Beispiel 3 (zum Vergleich)

Man verfährt wie in Beispiel 1 und erzeugt einen zweischichtigen Film. Nach dem Trocknen des Films trägt man auf diesen eine analog Lösung A hergestellte Lösung mit einem Naßauftrag von 130 µm an, die als Farbstoff Direct Blue 15 (C.I. Nr. 24 400) enthält. Nach dem Trocknen erhält man einen in der Aufsicht schwarzen 21 µm dicken Film, der nach dem Recken ein Kontrastverhältnis von >20 über den sichtbaren Spektralbereich zwischen 400 und 650 nm hat, bei einer Farbdichte von >2,5.

## Patentansprüche

1. Verfahren zur Herstellung von lichtpolarisierenden Gießfolien, die in zwei oder mehreren Schichten aufgebaut sind, wobei sich mindestens zwei Schichten in ihrer Zusammensetzung unterscheiden, dadurch gekennzeichnet, daß man wäßrige Lösungen von Polyvinylalkohol und dichroitischen farbgebenden Komponenten zwei- oder mehrmals auf einer Unterlage mittels eines Mehrfachgießers anträgt und trocknet, den getrockneten Film von der Unterlage löst und anschließend monoaxial verstreckt.

2. Verfahren gemäß Anspruch 1, dadurch gekennzeichnet, daß der Naßauftrag der Schichten in Dicken von 10 bis 500 µm erfolgt.

3. Verfahren gemäß Anspruch 1, dadurch gekennzeichnet, daß der von der Unterlage gelöste Film bei Temperaturen von 60 bis 180°C um einen Betrag von 300 bis 1000 % verstreckt wird.

4. Verfahren gemäß Anspruch 1, dadurch gekennzeichnet, daß ein Polyvinylalkohol eingesetzt wird, der durch vollständige oder teilweise Verseifung von Polyvinylacetat hergestellt worden ist.

## Claims

1. Process for the production of light-polarizing cast films which are built up in two or more layers, at least two layers differing in their composition, characterized in that aqueous solutions of polyvinyl alcohol and dichroic colour-donating components are applied twice or more times to a substrate by means of a multi-casting unit and dried, and the dried film is detached from the substrate and then stretched monoaxially.

2. Process according to Claim 1, characterized in that the wet application of the layers is carried out in thicknesses of 10 to 500 µm.

3. Process according to Claim 1, characterized in that the film detached from the substrate is stretched by an amount of 300 to 1000% at temperatures of 60 to 180°C.

4. Process according to Claim 1, characterized in that a polyvinyl alcohol which has been prepared by complete or partial-hydrolysis of polyvinyl acetate is employed.

## Revendications

1. Procédé de préparation de feuilles minces coulées polarisant la lumière qui sont constituées en deux ou plusieurs couches, au moins deux couches étant différentes par leur composition, caractérisé en ce que l'on applique deux ou plusieurs fois sur une base, au moyen d'un verseur multiple, des solutions aqueuses de poly(alcool vinylique) et de composants colorants dichroïques que l'on sèche, on sépare le film séché de la base puis on l'étire monoaxialement.

2. Procédé selon la revendication 1, caractérisé en ce que l'application humide des couches a lieu en des épaisseurs de 10 à 500 µm.

3. Procédé selon la revendication 1, caractérisé en ce que le film séparé de la base est étiré à raison de 300 à 1 000 % à des températures de 60 à 180°C.

4. Procédé selon la revendication 1, caractérisé en ce que l'on utilise un poly(alcool vinylique) qui a été préparé par saponification totale ou partielle de poly(acétate de vinyle).
